# FASCICULE DE BREVET EUROPEEN

(11) **EP 3 291 283 B1**
(45) Date de publication et mention de la délivrance du brevet: **09.01.2019**
(21) Numéro de dépôt: 17188995.9
(22) Date de dépôt: 01.09.2017
(51) Int. Cl.: G01J 5/00, H01K 1/14, H01K 1/12, H01K 1/10, G01J 5/04, H01K 13/00, H02S 10/30

(54) **SURFACE D'EMISSION DE RAYONNEMENT INFRAROUGE IR A EMISSIVITE THERMIQUE ELEVEE ET A GRANDE DUREE DE VIE ET SON PROCEDE DE FABRICATION**
FLÄCHE ZUR ABSTRAHLUNG VON INFRAROT(IR)-STRAHLUNG MIT HOHER WÄRMEABSTRAHLUNG UND LANGER LEBENSDAUER, UND IHR HERSTELLUNGSVERFAHREN
SURFACE FOR EMITTING IR INFRARED RADIATION WITH HIGH THERMAL EMISSIVITY AND LONG DURABILITY AND METHOD FOR MANUFACTURING SAME

(30) Priorité: 05.09.2016 FR 1658240
(43) Date de publication de la demande: 07.03.2018
(73) Titulaire: Commissariat à l'Energie Atomique et aux Energies Alternatives, 75015 Paris (FR)
(72) Inventeur: OLLIER, Emmanuel, 38000 GRENOBLE (FR); DUNOYER, Nicolas, 38000 GRENOBLE (FR)
(74) Mandataire: Tanguy, Yannick

(56) Documents cités:
- EP-A1- 2 966 773
- DE-A1- 19 845 423
- FR-A1- 3 014 177
- JP-A- 2015 027 207
- US-A- 4 396 643
- US-A- 6 031 970
- US-A1- 2006 076 868

## Description

La présente invention concerne une surface d'émission de rayonnement infrarouge IR dans un domaine de longueurs d'onde prédéterminé et son procédé de fabrication.

La présente invention concerne plus particulièrement une surface d'émission IR, réalisée par texturation sur un matériau et résistante à un milieu oxydant comme l'air et/ou à des hautes températures.

La présente invention concerne également un émetteur de rayonnement infrarouge IR à forte émissivité dont la surface d'émission a été structurée pour émettre un fort rayonnement thermique dans la même gamme de longueurs d'onde que celle correspondant à une réduction de la réflectivité ou encore une augmentation de l'absorption de ladite surface.

En effet, suivant la loi de Kirchhoff pour un matériau opaque une surface, rendue par sa structuration fortement absorbante dans une gamme de longueurs d'onde prédéterminée, est également une surface capable d'émettre efficacement un rayonnement thermique dans la même gamme de longueurs d'onde. De par ses propriétés optiques, une telle surface est capable d'émettre un rayonnement infrarouge IR de spectre différent de celui du corps noir en privilégiant l'émission dans les longueurs d'ondes proches des dimensions de structuration.

Il est connu que des structures fortement absorbantes sont aussi des structures qui permettent d'émettre efficacement un rayonnement thermique aux mêmes longueurs d'ondes suivant la loi de Kirchhoff pour un corps opaque.

Ces structures ont donc un fort intérêt notamment dans le domaine du proche infrarouge pour constituer de bonnes sources thermiques IR. Ce type de source peut être par exemple utilisé pour des capteurs de gaz IR. Dans ce cas, un matériau constituant la source IR est porté à haute température (plusieurs centaines de degrés), il émet son rayonnement IR qui traverse une zone comprenant une matière comme un gaz dont on veut connaitre la composition. Cette matière absorbe généralement le rayonnement infrarouge IR dans une gamme de longueur d'onde précise et un détecteur infrarouge IR permet donc d'enregistrer le rayonnement transmis. On peut alors remonter à la concentration en matière (généralement un gaz) recherché. Des sources émettant dans la gamme 1 à 5 microns permettent par exemple la détection du dioxyde de carbone CO₂, du monoxyde de carbone CO, ainsi que des hydrocarbures volatiles.

Dans l'exemple particulier de la source d'un capteur de dioxyde de carbone CO₂ gazeux, ce gaz absorbe en particulier dans la gamme 4-4.5 microns. C'est la bande généralement recherchée pour l'analyse de ce gaz.

Les matériaux généralement utilisés pour l'émission infrarouge IR sont les suivants : les métaux dits « noirs » tels que le platine, l'or, et l'aluminium, rendus noirs de par leur structure de dépôt poreuse, les structures de surfaces obtenues par laser femto-seconde, les nanotubes de carbone, le silicium texturé et revêtu de métal.

Les structures de surfaces obtenues par laser femto-seconde sont par exemple décrits dans l'article de A.Y. Vorobyev, intitulée « Colorizing metals with femtosecond laser pulses », publiés dans Applied Physics Letters 92, 041914 (2008).

Le silicium texturé et revêtu de métal est par exemple décrit dans l'article de L. Müller et al., intitulé « Infrared emitting naostructures for highly efficient microhotplates » et publié dans Journal of Micromechanics and microengineering, 24(2014) 035014.

Des techniques plus récentes recherchent maintenant une émission sélective en termes de spectres dans les domaines du thermo-photovoltaïque, de l'analyse hyper-spectrale, des capteurs NDIR sans filtres. Suivant ces techniques, des surfaces fonctionnalisées avec des puits quantiques permettent aujourd'hui de réaliser en laboratoire des sources dont le rayonnement peut être contrôlé en longueur d'onde et émettre dans une bande étroite de longueur d'onde.

Un exemple de ces structures de surfaces est décrit par exemple dans l'article de T. Inoue et al., intitulé « Filter-free nondispersive infrared sensing using narrow-banwidth mid-infrared thermal emitters » et publié dans Applied Physics Express, 7, 012103 (2014). Néanmoins ces structures sont coûteuses à réaliser avec des étapes technologiques de type lithographie électronique. De plus elles sont destinées à être intégrées dans des boitiers sous vide, ce qui augmente la complexité.

En termes de matériaux, les empilements comportent souvent des alternances de matériaux diélectriques et métalliques (empilements de type Salisbury, utilisant des couches quart d'ondes) qui permettent d'augmenter l'absorption et donc l'émission dans un domaine précis de longueur d'onde. Ces empilements présentent l'inconvénient d'être relativement épais et de comporter des métaux généralement sensibles à l'oxydation à haute température. Des cristaux photoniques ont aussi été proposés. Enfin la plasmonique a permis de proposer des structures résonantes métalliques, mais leurs métaux restent sensibles à l'oxydation à haute température.

Des structures MIM (métal / isolant / metal) ont aussi été développées car elles permettent d'accorder relativement facilement une raie d'absorption / émission et pourraient permettre d'allier sélectivité spectrale et angulaire. Un exemple de structure MIM est décrit dans l'article de H. T. Miyazaki, intitulé « Ultraviolet-nanoimprinted packaged metasurface thermal emitters for infrared CO2 sensing » et publié dans Science and Technology of Advanced Materials, N°16, (2015) 035005.

Ces structures présentent par contre encore l'inconvénient de comporter des métaux qui pourront être sensibles à l'oxydation lorsque les structures seront chauffées dans l'air ou également dans un vide peu poussé.

Malgré des avancées intéressantes, notamment sur l'émission sélective des structures constituant les sources IR pour les capteurs de gaz, il reste néanmoins que celles-ci, en tant que sources thermiques, doivent être chauffées à plusieurs centaines de degrés Celsius pour émettre leur rayonnement infrarouge IR. Ces structures comportent souvent des métaux qui sont tous plus ou moins sensibles à l'oxydation à plus ou moins long terme ou à l'inter-diffusion des couches utilisées. La mise sous vide des sources émettrices, souvent recommandée pour des raisons de réduction de pertes thermiques ou de stabilité des matériaux, n'est pas toujours une solution facile à mettre en oeuvre et est relativement couteuse. Si une utilisation sous air ou vide peu poussé est mise en place, les solutions existantes seront limitées par l'oxydation des structures. Par ailleurs, même sans milieu oxydant la qualité des interfaces optiques créées peut être modifiée par diffusion des éléments sous l'effet de la température et rendre instable dans le temps les caractéristiques d'émission des sources IR.

C'est ce problème technique de stabilité en température, en particulier en milieu oxydant que résout la présente invention.

A cet effet, l'invention a pour objet une surface d'émission de rayonnement infrarouge IR, à émissivité thermique élevée, pour émetteur de rayonnement infrarouge, comprenant un substrat, constitué d'une épaisseur d'un premier matériau à base de carbure de silicium SiC, et ayant une face plane ou courbe, et un ensemble de microstructures de texturation tapissant la face. La surface d'émission de rayonnement infrarouge IR est caractérisée en ce que chaque microstructure est formée par une unique protubérance réalisée dans le premier matériau, disposée sur et d'un seul tenant avec le substrat, et les microstructures ont une même forme et mêmes dimensions, et sont réparties sur la face du substrat selon un motif périodique bidimensionnel, et la forme de chaque microstructure est lisse et régulière en ayant un sommet unique et un rayon de courbure qui varie continument depuis le sommet de la microstructure jusqu'à la face du substrat.

Suivant des modes particuliers de réalisation, la surface d'émission de rayonnement infrarouge IR comprend l'une ou plusieurs des caractéristiques suivantes :
.- le premier matériau à base de carbure de silicium est du carbure de silicium SiC monocristallin ou poly-cristallin, ou du carbure de silicium SiC monocristallin ou poly-cristallin, enrichi en silicium Si sous forme d'îlots de silicium Si ;
.- la surface de chaque microstructure présente un sommet, situé dans une zone centrale à une même hauteur maximale h, correspondant à la hauteur de la microstructure, et ladite surface de la microstructure décroit depuis le sommet vers un bord d'une base de la microstructure ;
.- la surface de chaque microstructure comporte une partie de la surface d'une calotte sphérique ou elliptique ou parabolique ;
.- chaque microstructure a sensiblement un même diamètre de base d supérieur ou égal à 0,5 µm et inférieur ou égal à 7 µm, de préférence compris entre 1 µm et 5 µm, et la même hauteur maximale h de chaque microstructure est supérieure ou égale à 0,5 fois le diamètre de base d et inférieure ou égale à 10 fois le diamètre de base d ;
.- le rayon de courbure p de chaque microstructure est supérieur ou égal à 0,1 µm et distribué autour d'une valeur centrale de rayon de courbure comprise entre 0,5 µm et 5 µm ;
.- l'agencement des microstructures sur la face d'exposition du substrat est réalisé sous la forme d'un pavage de réseaux élémentaires de microstructures, les réseaux élémentaires ayant un même motif de maille compris dans l'ensemble formé par les mailles hexagonales, les mailles carrés, les mailles triangulaires, et étant caractérisé par un degré de compacité des microstructures entre elles ;
.- la surface de chaque microstructure et la face du substrat sont oxydées.

L'invention a également pour objet un émetteur de rayonnement infrarouge IR comportant une surface d'émission de rayonnement infrarouge IR telle que définie ci-dessus.

Suivant des modes particuliers de réalisation, l'émetteur de rayonnement infrarouge IR comprend l'une ou plusieurs des caractéristiques suivantes :
.- l'émetteur de rayonnement infrarouge IR est compris dans l'ensemble des dispositifs formé par les sources de chauffage infrarouge, et les émetteurs infrarouges IR vers une cellule thermo-photovoltaïque pour convertir la chaleur en électricité, et les émetteurs d'une source infrarouge IR pour des capteurs de gaz.

L'invention a également pour objet un procédé de fabrication d'une surface d'émission de rayonnement infrarouge IR, apte à fonctionner à des températures élevées, ledit procédé de fabrication comprenant une première étape consistant à fournir un substrat, constitué d'une épaisseur d'un premier matériau à base de carbure de silicium SiC, et ayant une face d'exposition plane ou courbe. Le procédé de fabrication est caractérisé en ce qu'il comprend en outre une deuxième étape, exécutée à la suite de la première étape, consistant à réaliser un ensemble de microstructures de texturation, tapissant la face, chaque microstructure étant formée par une unique protubérance réalisée dans le premier matériau, et disposée sur et d'un seul tenant avec le substrat, et les microstructures ayant une même forme et mêmes dimensions, étant réparties sur la face du substrat selon un motif périodique bidimensionnel, et la forme de chaque microstructure étant lisse et régulière en ayant un sommet unique et un rayon de courbure qui varie continument depuis le sommet jusqu'à la face.

Suivant des modes particuliers de réalisation, le procédé de fabrication d'une surface sélective d'émission de rayonnement infrarouge IR comprend l'une ou plusieurs des caractéristiques suivantes :
.- la première étape consiste : soit à fournir du carbure de silicium SiC monocristallin ou poly-cristallin, ou soit à fournir du carbure de silicium SiC monocristallin ou poly-cristallin, enrichi en silicium sous forme d'îlots de silicium Si ;
.- la première étape consiste : soit à comprimer de manière isostatique une poudre de carbure de silicium SIC, ou soit à faire croitre du carbure de silicium SiC poly-cristallin, ou soit à faire croitre du carbure de silicium SiC monocristallin, ou soit à infiltrer du silicium à Si haute température dans une matrice carbonée poreuse ;
.- la deuxième étape comprend les étapes successives consistant à, dans une troisième étape déposer une monocouche compacte de particules en un deuxième matériau à la surface du substrat, et dans une quatrième étape graver par un procédé de gravure sèche le substrat du côté de la face d'exposition au travers d'interstices existant entre les particules, le deuxième matériau étant compris dans l'ensemble formé par la silice (SiO₂), le polystyrène (PS) ou tout autre matériau colloïdal sous forme de billes de dimension requise ;
.- une réduction de la taille et de la forme des particules par gravure sèche est mise en oeuvre, soit dans une cinquième étape exécutée pendant la quatrième étape en même temps que la gravure sèche du substrat, soit dans une sixième étape interposée entre la troisième étape et la quatrième étape ;
.- le dépôt du film compact de particules, mis en oeuvre au cours de la troisième étape, est réalisé soit par une technique de dépôt faisant intervenir l'interface air/liquide pour ordonner les particules comprise dans l'ensemble formé par la technique de Langmuir Blodgett, la technique de Langmuir Shaefer, la méthode vortique de surface, la technique du transfert par flottaison, la technique de l'écoulement laminaire fin dynamique et mobile, soit par une technique de depôt faisant intervenir exclusivement des particules en solution colloïdale comprise dans l'ensemble formé par le dépôt électrophorétique, le dépôt horizontal par évaporation d'un film, le dépôt par évaporation d'un bain, le dépôt par retrait vertical d'un substrat immergé et le dépôt horizontal par retrait forcé de la ligne de contact ;
.- le procédé de gravure sèche mis en oeuvre dans la quatrième étape est une gravure réactive ionique utilisant un mélange gazeux d'hexafluorure de soufre (SF₆) et de dioxygène (O₂) dans un rapport de 5/3 ;
.- la vitesse de gravure du matériau substrat Vsub et la vitesse de gravure Vpar des particules, la sélectivité de gravure Sg, définie comme le rapport de la vitesse de gravure du substrat sur la vitesse de gravure des particules, et le temps de gravure sont réglés de façon à consommer la totalité des particules et éviter la création d'arêtes vives sur la surface du substrat ;
.- le procédé de fabrication comprend une septième étape de retrait des particules exécutée après la quatrième étape ;
.- le procédé de fabrication d'une surface d'émission de rayonnement infrarouge IR comprend une huitième étape d'oxydation de la surface des microstructures et de la face du substrat.

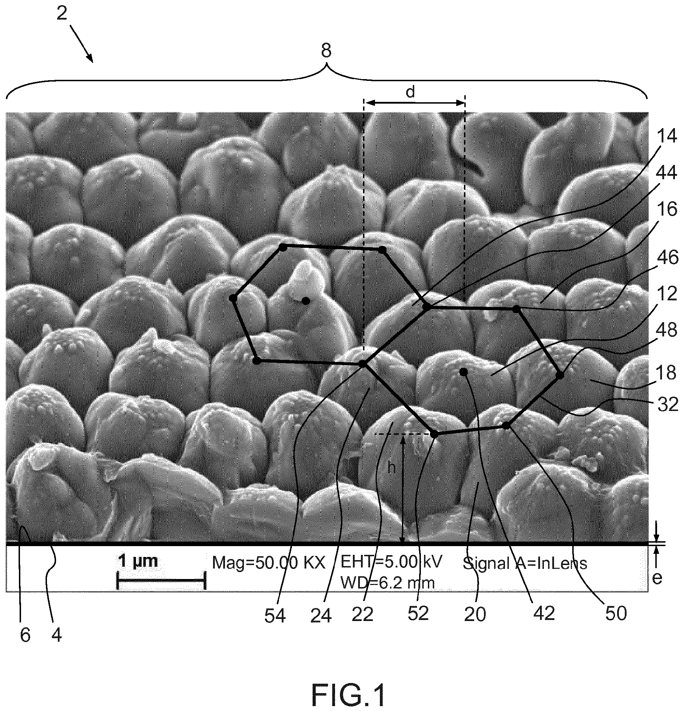

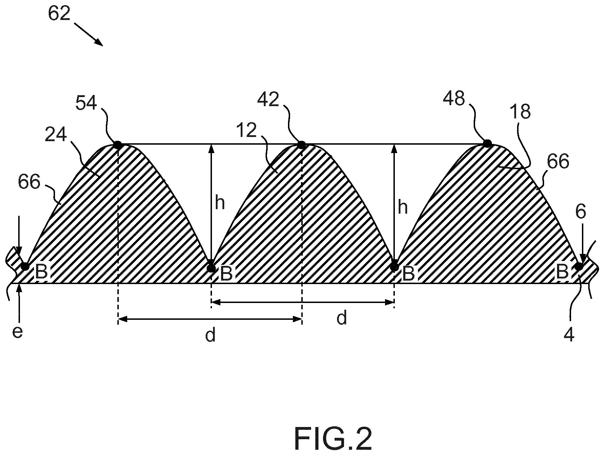

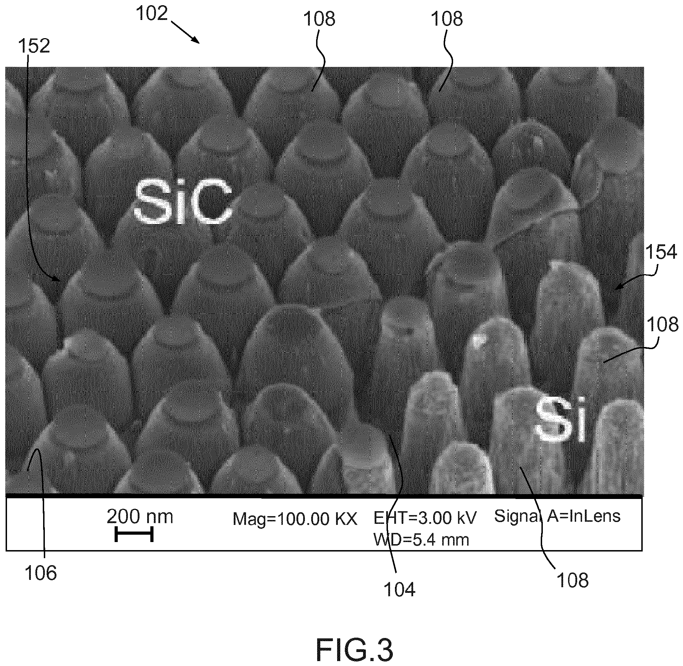

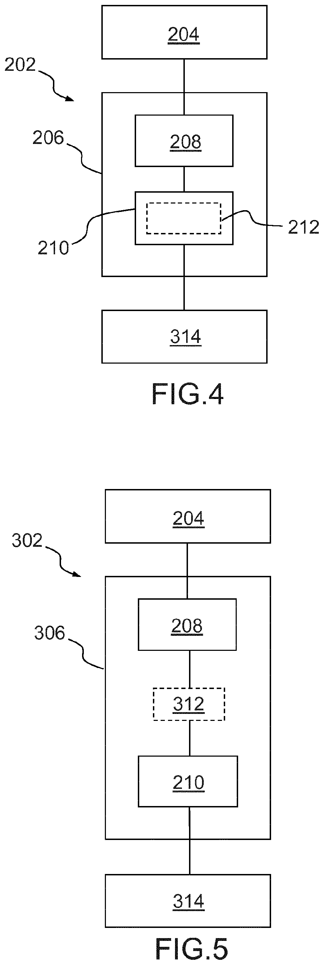

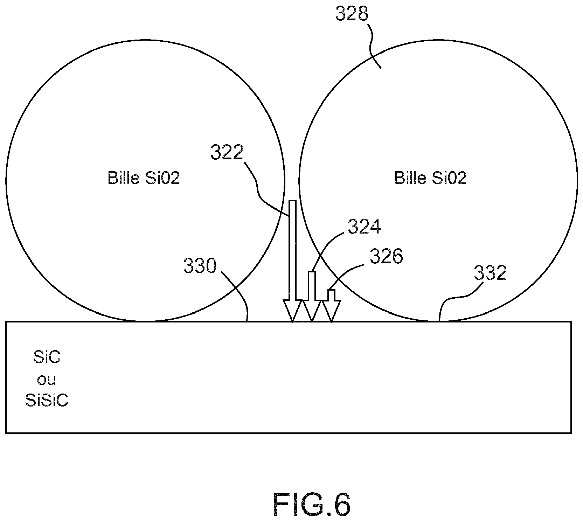

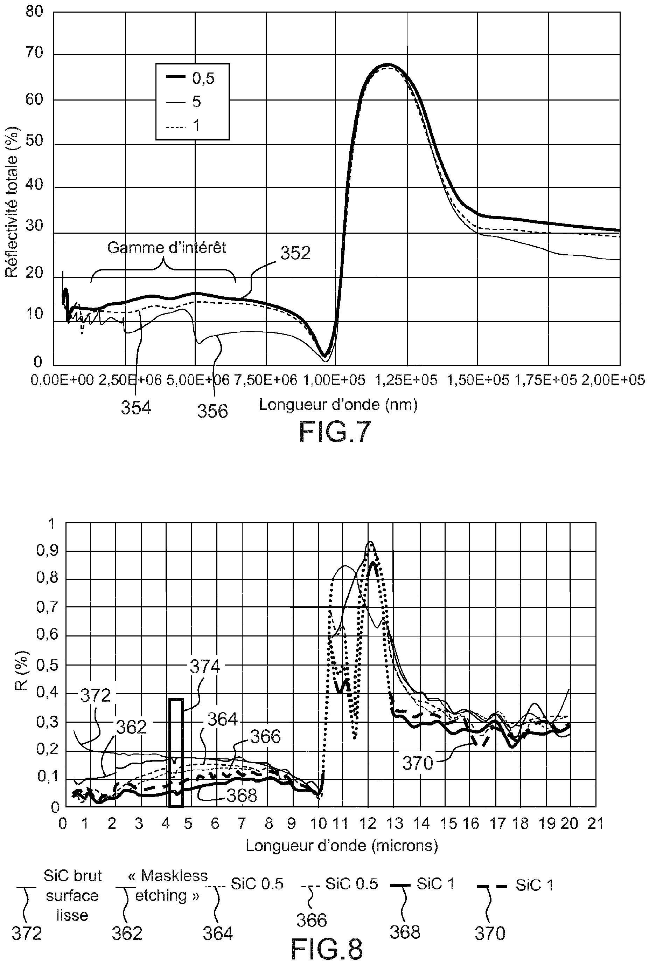

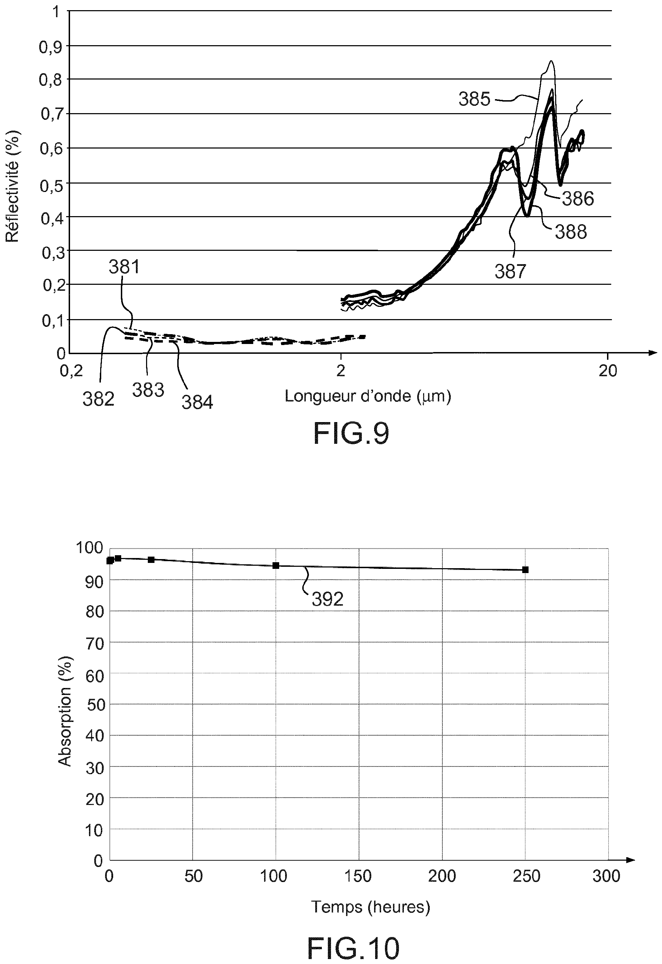

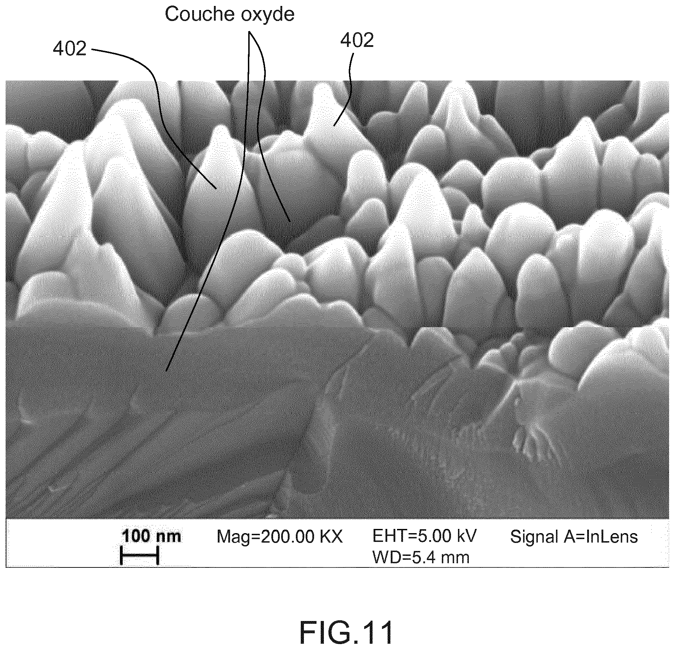

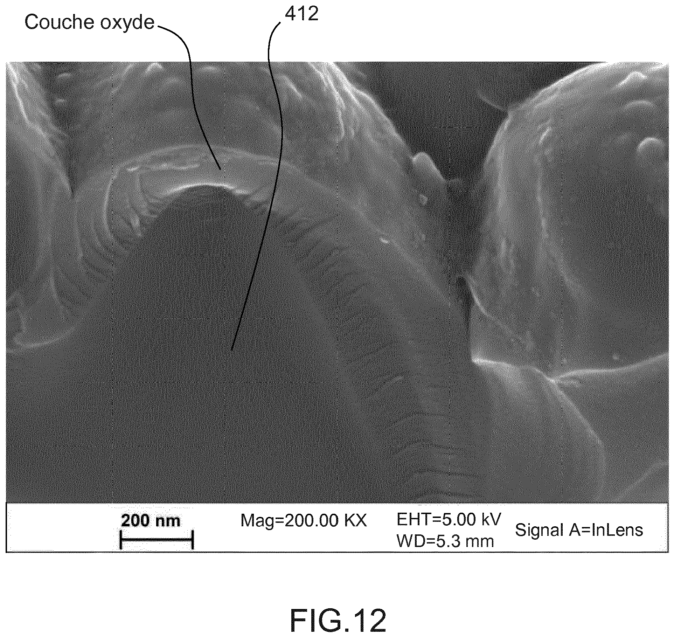

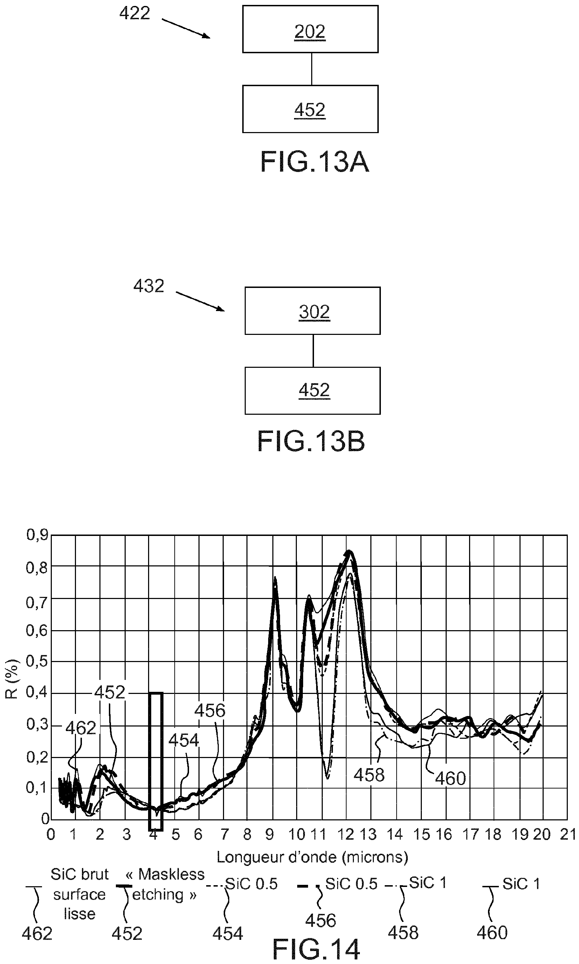

L'invention sera mieux comprise à la lecture de la description de plusieurs formes de réalisation qui va suivre, donnée uniquement à titre d'exemple et faite en se référant aux dessins sur lesquels :
.- la Figure 1 est une vue par microscopie électronique à balayage d'une première forme de réalisation d'une surface d'émission de rayonnement infrarouge IR à émissivité thermique élevée, micro-structurée et en carbure de silicium SiC poly-cristallin selon l'invention, obtenue par gravure plasma au travers d'un masque de billes auto-organisées de diamètre 1 micron (µm) ;
.- la Figure 2 est une vue en coupe dans le sens de leur hauteur et passant leurs sommets de trois microstructures adjacentes de la surface d'émission de rayonnement infrarouge IR de la Figure 1 ;
.- la Figure 3 est une vue par microscopie électronique à balayage d'une deuxième forme de réalisation d'une surface de rayonnement infrarouge IR à émissivité thermique élevée, micro-structurée et en carbure de silicium enrichi en silicium SiSiC polycristallin selon l'invention, obtenue par gravure plasma au travers d'un masque de billes auto-organisées de diamètre 0,5 micron (µm) ;
.- la Figure 4 est un ordinogramme général d'un premier mode de réalisation d'un procédé de fabrication d'une surface d'émission de rayonnement infrarouge texturée telle que celle des Figures 1 à 3;
.- la Figure 5 est un ordinogramme d'un deuxième mode de réalisation d'un procédé de fabrication d'une surface d'émission de rayonnement infrarouge texturée telle que celle des Figures 1 à 3 ;
.- la Figure 6 est une vue du mécanisme principal de la gravure sèche mise en oeuvre dans les procédés de fabrication des Figures 1 à 3;
.- la Figure 7 est une vue de spectres simulés de réflectivité de différentes structurations des surfaces d'émission IR selon l'invention illustrant l'effet de la taille des structures sur la réflectivité ;
.- la Figure 8 est une vue de spectres mesurés de réflectivité dans les domaine visible et infrarouge pour différentes structurations d'une surface selon l'invention en carbure de silicium SiC en comparaison avec le spectre mesuré d'une surface de carbure de silicium SiC brute non structurée ou lisse, les spectres étant mesurés avant vieillissement dans un environnement oxydant à haute température ;
.- la Figure 9 est une vue des spectres de réflectivité mesurés dans les domaines visibles et infrarouge pour la surface d'émission de rayonnement infrarouge de la deuxième forme de réalisation de la Figure 3 ;
.- la Figure 10 est une vue de l'évolution de l'absorption d'un émetteur de rayonnement infrarouge IR en carbure de silicium enrichi SiSiC, la surface d'émission de l'absorbeur étant structurée suivant la deuxième forme de réalisation de la Figure 3 et exposée à l'air à une température de 1000°C;
.- la Figure 11 est une vue par microscopie à balayage électronique de l'effet technique de la forme accidentée ou irrégulière et de la petite taille des microstructures sur les performances en vieillissement de la surface micro-structurée en termes de modifications de la forme et de la taille des microstructures parasites, le vieillissement sous air étant visualisée après 250 heures à une température permanente de 1000°C ;
.- la Figure 12 est une vue par microscopie à balayage électronique de l'effet technique de la forme régulière et de taille des microstructures d'une surface selon l'invention des Figures 1 et 3 sur les performances en vieillissement de la surface micro-structurée en termes de modifications de la forme et de la taille des microstructures, le vieillissement sous air étant visualisé après 250 heures à une température permanente de 1000°C ;
.- les Figures 13A et 13B sont des ordinogrammes d'un troisième et d'un quatrième mode de réalisation d'un procédé de fabrication d'une surface d'émission de rayonnement infrarouge texturée mettant en oeuvre une étape d'oxydation supplémentaire ;
.- la Figure 14 est une vue de spectres mesurés de réflectivité dans les domaine visible et infrarouge pour différentes structurations d'une surface d'émission IR selon l'invention en comparaison avec le spectre mesuré d'une surface de carbure de silicium SiC non structurée ou lisse, les mesures ayant lieu après un traitement thermique sous air à une température de 1200°C pendant 100 heures.

L'invention porte sur l'utilisation de matériaux structurés à base de carbure de silicium SiC pour des surfaces sélective d'émission de rayonnement infrarouge IR, les matériaux à base de carbure de silicium apportant une forte résistance à l'oxydation sous des températures élevées qui dépassent 500°C, voire 1000°C.

L'invention porte également sur la géométrie de la structuration des matériaux à base de carbure de silicium et sur ses procédés d'obtention de ces structurations qui permettent d'augmenter dans une gamme de longueur d'onde prédéterminée l'absorption du rayonnement et l'émission thermique de rayonnement infrarouge dans un domaine de longueur donné, et d'augmenter la résistance de ces performances optiques à haute température et en milieu agressif, par exemple oxydant comme l'air.

L'augmentation de la puissance IR rayonnée lorsque le matériau est porté à relativement haute température, de quelques centaines de degrés Celsius à plus de 1000°C, est ainsi obtenue en augmentant l'absorption et donc en diminuant la réflectivité des matériaux opaques à base de carbure de silicium constituant la surface d'émission.

Par exemple, une surface d'émission et son procédé de fabrication sont particulièrement adaptés à celui d'un émetteur infrarouge IR pour la détection du dioxyde de carbone CO₂ dans la gamme de longueur d'onde allant de 4 à 4,5 microns.

Suivant la Figure 1, une surface d'émission de rayonnement infrarouge 2 dans une gamme de longueur d'onde infrarouge prédéterminée, à forte absorption dans le domaine du visible et du proche infrarouge et à forte émissivité thermique, en particulier pour des émetteurs de rayonnement infrarouge IR, apte à fonctionner à des températures élevées, comprend un substrat 4, constitué d'une épaisseur e d'un premier matériau à base de carbure de silicium SiC, et ayant une face 6 plane ou courbe d'émission.

Le premier matériau à base de carbure de silicium est ici un matériau en carbure de silicium de premier type, constitué de carbure de silicium SiC poly-cristallin.

La surface d'émission de rayonnement infrarouge 2 comprend également un ensemble 8 de microstructures 12, 14, 16, 18, 20, 22, 24 de texturation tapissant la face 6 d'émission exposé du substrat 4.

Ici, seules sept microstructures 12, 14, 16, 18, 20, 22, 24 de texturation ont été désignées par une référence numérique par souci de simplification de la description.

Chaque microstructure 12, 14, 16, 18, 20, 22, 24 de texturation est formée par une unique protubérance, réalisée dans le premier matériau, et disposée sur et d'un seul tenant avec le substrat 4.

Les microstructures 12, 14, 16, 18, 20, 22, 24 ont une même forme et mêmes dimensions ; elles s'étendent parallèlement au moins localement les unes par rapport aux autres suivant une direction locale, perpendiculaire à la face d'émission exposé 6 en l'emplacement de chaque microstructure 12, 14, 16, 18, 20, 22, 24.

Les microstructures 12, 14, 16, 18, 20, 22, 24 sont réparties sur la face d'émission exposée 6 du substrat 4 selon un motif périodique bidimensionnel 32. Ici, la forme du motif périodique bidimensionnel 32 est par exemple hexagonale compacte.

La forme de chaque microstructure 12, 14, 16, 18, 20, 22, 24 est lisse et régulière en ayant un sommet unique, 42, 44, 46, 48, 50, 52, 54 et un rayon de courbure qui varie continûment depuis le sommet de la microstructure 12, 14, 16, 18, 20, 22, 24 jusqu'à la face d'émission exposé 6 du substrat 4.

Suivant la Figure 2, un profil 62 de coupe partielle de l'ensemble 8 des microstructures, ici les trois microstructures 24, 12, 18, alignées et adjacentes entre elles, et du substrat 4 en support, comporte une ligne de contour 66 continue de la surface 6 d'émission.

Suivant les Figures 1 et 2, la surface de chaque microstructure 12, 14, 16, 18, 20, 22, 24 présente un même maximum en hauteur h, situé dans une zone centrale entourant son sommet et correspondant à la hauteur de la microstructure 12, 14, 16, 18, 20, 22, 24, et décroit depuis son sommet vers un bord B d'une base de la microstructure 12, 14, 16, 18, 20, 22, 24.

Les microstructures 12, 14, 16, 18, 20, 22, 24 de texturation sont obtenues dans cet exemple par gravure plasma au travers d'un masque de billes auto-organisées ayant un diamètre égal à un micron. Le diamètre d d'une microstructure située respectivement en dessous de chaque bille est ici corrélativement d'environ 1 micromètre et le haut de la forme de chaque microstructure 12, 14, 16, 18, 20, 22, 24 peut être décrit ici par une demi-sphère ou un cône arrondi ou le sommet d'une parabole.

Ici et de manière préférée, toutes les microstructures adjacentes sont jointives en leurs bords au niveau de la face d'exposition, et leur surface de jonction présente un point ou une ligne de courbure discontinue.

En variante, les microstructures adjacentes ne sont pas jointives en leurs bords au niveau de la face d'exposition, et la courbe de jonction de chaque microstructure avec la face d'exposition présente une ligne de courbure discontinue.

En variante, les microstructures adjacentes ne sont pas jointives en leurs bords au niveau de la face d'exposition, et sur un voisinage de la courbe de jonction de chaque microstructure avec la face d'exposition, la courbure est continue.

Des diamètres de 0.5 micron peuvent être utilisés et produisent une performance optique, analogue dans le domaine du visible à celle obtenue avec un diamètre de 1 micron, mais différente dans le domaine de l'infrarouge. L'arrangement des microstructures 12, 14, 16, 18, 20, 22, 24 dans le plan local de la surface structurée est périodique à l'instar de l'arrangement du tapis de billes utilisé, le motif périodique de l'agencement étant de préférence hexagonal compact mais pourrait être différent.

Suivant la Figure 1 qui est une vue de dessus en perspective de la surface d'émission 2, il apparait clairement que le motif périodique bidimensionnel 32 est hexagonal compact et que le réseau des microstructures ainsi constitué est un réseau compact à maille hexagonale.

Suivant la Figure 3 et un deuxième mode de réalisation de l'invention, une surface d'émission infrarouge 102 dans une gamme de longueur d'onde infrarouge prédéterminée est structurée et élaborée cette fois-ci dans un matériau à base de carbure de silicium de deuxième type SiSiC qui, à l'instar de la surface antireflet de la Figure 2 comporte du carbure de silicium SiC, mais qui est enrichi en silicium Si en présentant des îlots de silicium Si. Ce deuxième type de matériau SiSiC est par exemple obtenu par la formation d'un matériau carboné poreux à partir d'une pyrolyse puis une infiltration d'un précurseur de silicium est réalisée à haute température pour former le composé de carbure de silicium SiSiC. Dans le cas de ce deuxième type de matériau, la structure obtenue est analogue à cette obtenue pour le carbure de SiC du matériau de premier type de la Figure 1 et résulte en un arrangement hexagonal compact de structures qui peuvent être décrites par une forme de dômes paraboliques ou de cônes arrondis, voire de demi-sphères dont le diamètre est ici de 0.5 micron.

Ici sur la Figure 3, deux zones du matériau du substrat 104 et des microstructures 108 reposant sur la face d'exposition 106 du substrat 104 sont représentées partiellement. Une première zone 152 en carbure de silicium SiC est illustrée en coin supérieur gauche de la Figure 3 et une deuxième zone 154 de silicium Si est illustrée en coin inférieur droit de la Figure 3, laquelle deuxième zone 154 forme un îlot de silicium Si du substrat 104.

Il est à remarquer que les résidus de billes de silice visibles sur le haut de certaines microstructures 108 ne font pas partie desdites microstructures et que ces résidus de billes auront disparu en fin du procédé de fabrication du fait de la consommation par le procédé de gravure.

De manière générale, une surface d'émission de rayonnement infrarouge selon l'invention, à émissivité thermique élevée, en particulier pour des émetteurs de rayonnement infrarouge IR, apte à fonctionner à des températures élevées, comprend un substrat, constitué d'une épaisseur d'un premier matériau à base de carbure de silicium SiC, et ayant une face d'émission plane ou courbe, et un ensemble de microstructures de texturation tapissant la face dudit substrat.

Chaque microstructure est formée par une unique protubérance réalisée dans le premier matériau, disposée sur et d'un seul tenant avec le substrat. Les microstructures ont une même forme et mêmes dimensions, et sont réparties sur la face d'émission exposé du substrat selon un motif périodique bidimensionnel, et la forme de chaque microstructure est lisse et régulière en ayant un sommet unique et un rayon de courbure qui varie continûment depuis le sommet de la microstructure jusqu'à la face d'émission exposé du substrat.

Le premier matériau à base de carbure de silicium est compris dans l'ensemble formé par le carbure de silicium SiC monocristallin, le carbure de silicium poly-cristallin, le carbure de silicium SiC monocristallin ou poly-cristallin, enrichi en silicium sous forme d'îlots de silicium Si.

De manière particulière, la surface de chaque microstructure comporte une partie de la surface d'une calotte sphérique ou elliptique ou parabolique.

De manière générale et indépendamment de la forme de réalisation de la surface sélective d'émission de rayonnement infrarouge, chaque microstructure a sensiblement un même diamètre de base d supérieur ou égal à 0,3 µm et inférieur ou égal 10 µm, de préférence compris entre 1 µm et 5 µm, et la même hauteur maximale h de chaque microstructure est supérieure ou égale à 0,5 fois le diamètre de base d et inférieure ou égale à 10 fois le diamètre de base d.

Le rayon de courbure ρ de chaque microstructure est supérieur ou égal à 0,1 µm et distribué autour d'une valeur centrale ρ₀ de rayon de courbure comprise entre 0,5 µm et 5 µm.

De manière générale, l'agencement des microstructures sur la face d'émission exposée du substrat est réalisé sous la forme d'un pavage de réseaux élémentaires de microstructures, les réseaux élémentaires ayant un même motif de maille compris dans l'ensemble formé par les mailles hexagonales, les mailles carrés, les mailles triangulaires, et étant caractérisé par un degré de compacité des microstructures entre elles.

De manière particulière, la surface de chaque microstructure et la face du substrat sont oxydées.

Suivant la Figure 4 et une première forme de réalisation, un procédé 202 de fabrication de la texturation des surfaces d'émission de rayonnement infrarouges telles que décrites par exemple dans les Figures 1 à 3 comprend un ensemble d'étapes 204, 206, 208, 210, 212.

Ce procédé convient en particulier à la fabrication d'émetteur de rayonnement infrarouge IR dans un domaine de longueurs d'ondes prédéterminé, la surface texturée fabriquée étant apte à fonctionner à des températures élevées et/ou sous un environnement oxydant comme par exemple l'air.

Dans une première étape 204, un substrat est fourni, constitué d'une épaisseur d'un premier matériau à base de carbure de silicium SiC, stable thermiquement, et ayant une face d'émission plane ou courbe.

Dans une deuxième étape 206, exécutée à la suite de la première étape 204, un ensemble de microstructures de texturation tapissant la face du substrat est réalisée.

Chaque microstructure est formée par une unique protubérance réalisée dans le premier matériau, et disposée sur et d'un seul tenant avec le substrat.

Les microstructures ont une même forme et mêmes dimensions, et sont réparties sur la face d'émission exposée du substrat selon un motif périodique bidimensionnel.

La forme de chaque microstructure est lisse et régulière en ayant un sommet unique et un rayon de courbure qui varie continument depuis le sommet de la microstructure jusqu'à la face d'émission exposée du substrat.

La première étape 204 consiste :
soit à fournir du carbure de silicium SiC monocristallin ou poly-cristallin, ou
soit à fournir du carbure de silicium SiC monocristallin ou poly-cristallin, enrichi en silicium sous forme d'îlots de silicium Si.

De manière particulière la première étape 204 consiste :
soit à comprimer de manière isostatique une poudre de carbure de silicium SIC, ou
soit à faire croitre du carbure de silicium SiC poly-cristallin, ou
soit à faire croitre du carbure de silicium SiC monocristallin, ou
soit à infiltrer du silicium à Si haute température dans une matrice carbonée poreuse.

La deuxième étape 206 comprend une troisième étape 208 et une quatrième étape 210, exécutées successivement.

Dans la troisième 208 étape, une monocouche compacte de particules de masquage en un deuxième matériau est déposée à la surface du substrat, le deuxième matériau étant compris dans l'ensemble formé par la silice (SiO₂), le polystyrène (PS) ou tout autre matériau sous forme de billes de dimension requise.

Dans la quatrième étape 210, le substrat est gravé par un procédé de gravure sèche du côté de la face d'exposition au travers d'interstices existant entre les particules,

Pendant la quatrième étape 210, c'est-à-dire en même temps que la gravure sèche du substrat, dans une cinquième étape 212 une réduction de la taille et de la forme des particules par gravure sèche est mise en oeuvre.

Suivant la Figure 5 et une deuxième forme de réalisation dérivée de la première forme de réalisation, un procédé 302 de fabrication d'une surface sélective d'émission de rayonnement infrarouge, texturée par exemple pour des émetteurs de rayonnement infrarouge dans un domaine de longueurs d'onde prédéterminé, et telle que décrite par exemple dans les Figures 1 à 3, comprend un ensemble d'étapes 204, 306, 208, 210, 312.

La première étape 204 du procédé 302 de la Figure 5 est identique à la première étape du procédé 202 de la Figure 4.

La deuxième étape 306 du procédé 302 de la Figure 5 comprend à l'instar du procédé 202 de la Figure 4 la troisième étape 208 et la quatrième étape 210.

La deuxième étape 306 du procédé 302 de la Figure 5 diffère du procédé 202 de la Figure 4 en ce qu'elle comprend une sixième étape 312, interposée entre la troisième étape 208 et la quatrième étape 210, dans laquelle une réduction de la taille et de la forme des particules par gravure sèche est mise en oeuvre sans interaction avec la gravure sèche du substrat.

Suivant les Figures 4 et 5, les procédés de fabrication 202, 302 comprennent une septième étape 314 de retrait des particules, exécutée après la quatrième étape 210. Par exemple, la septième étape 314 consiste à nettoyer la surface texturée en la plongeant dans un bain d'éthanol en présence d'ultrasons pendant au moins 5 minutes.

Suivant les Figures 4 et 5, le dépôt du film compact de particules mis en oeuvre au cours de la troisième étape 208 est réalisé, soit par une technique de dépôt d'une première famille faisant intervenir l'interface air/liquide pour ordonner les particules, soit par une technique de dépôt d'une deuxième famille faisant intervenir exclusivement des particules en solution colloïdale.

La première famille de techniques de dépôt de particules en un film compact est l'ensemble formé par la méthode de transfert d'un monofilm de particules compactées sur un liquide porteur en mouvement, la technique de Langmuir Blodgett, la technique de Langmuir Shaefer, la méthode vortique de surface, la technique du transfert par flotaison, la technique de l'écoulement laminaire fin dynamique et mobile.

La deuxième famille de techniques de dépôt de particules en un film compact est l'ensemble formé par le dépôt électrophorétique, le dépôt horizontal par évaporation d'un film, le dépôt par évaporation d'un bain, le dépôt par retrait vertical d'un substrat immergé et le dépôt horizontal par retrait forcé de la ligne de contact.

Les billes de masquage déposées sont préférentiellement en SiO₂, mais peuvent être de nature différente tant que les paramètres principaux de la gravure sont respectés.

Les paramètres appliqués pour réaliser les dépôts de billes lorsque la méthode utilisée est la méthode de transfert d'un monofilm de particules compactées sur un liquide porteur en mouvement et lorsqu'une surface texturée des Figures 1 à 3 est fabriquée sont décrits ci-après dans le tableau 1 suivant.

**Tableau 1**

| Paramètres | Valeur appliquée | Min | Max |
|---|---|---|---|
| Diamètre des particules de silice | 1µm ou 540nm | 0,01 µm | 10µm |
| Solvant | Butanol | | |
| Concentration | 35g/l | 10g/l | 50g/l |
| Liquide porteur | Eau déionisée | | |
| Débit du liquide porteur | 400 ml/min | 100 ml/min | 1000ml/min |
| Débit d'injection des particules | 0,5 ml/min | 0,01 l/min | 3 ml/min |
| Vitesse de tirage | 1 cm/min | 0,1 cm/min | 10 cm/min |

Suivant les Figures 4 et 5, le procédé de gravure sèche mis en oeuvre dans la quatrième étape 210 est par exemple une gravure réactive ionique utilisant un mélange gazeux d'hexafluorure de soufre (SF₆) et de dioxygène (O₂) dans un rapport 5/3. D'autres gaz, aptes à graver sélectivement le matériau par rapport aux billes, pourront également être utilisés.

De manière générale et indépendamment du procédé de gravure sèche utilisé, la vitesse de gravure du matériau du substrat Vsub et la vitesse de gravure Vpar des particules sont supérieures à 50 nm par minute, et la sélectivité de gravure Sg, définie comme le rapport de la vitesse de gravure du matériau du substrat sur la vitesse de gravure des particules, est compris entre 1 et 10.

Lorsqu'une surface texturée des Figures 1 à 3 est fabriquée, le procédé de gravure sèche décrit ci-dessous peut être utilisé. Ce procédé de gravure met en oeuvre :
- des billes de silice SiO₂ de 530nm ou 1µm déposées par voie colloïdale avec flottaison d'une monocouche compacte de billes sur un solvant et report sur le substrat à texturer,
- un réacteur dec type « gravure par ion réactifs » RIE (dénommé en anglais Reactive Ion Etching),
- un générateur à la fréquence de 13.56GHz,
- un mélange de gaz de SF₆ et d'O₂,
- des flux de 5sccm pour SF₆ et 3sccm pour O₂,
- une Pression de 25mTorr,
- une puissance de 0.25W/cm² (20W sur une sole de diamètre de 10cm), et
- une température de substrat égale à 50°C.

Le temps du procédé de gravure dépend du type de matériau utilisé pour le substrat et du diamètre des billes utilisé.

Lorsque des billes de diamètre 530 nm sont utilisées, le temps du procédé de gravure est égal à 600s pour un matériau de substrat de premier type SiC, et égal à 480s pour un matériau de substrat de deuxième type SiSiC.

Dans le cas de bille de silice de diamètre 1 micron le temps du procédé de gravure est multiplié par 2 par rapport aux billes de diamètre 530nm, soit par exemple 1200s pour un substrat de premier type SiC.

Les conditions des procédés de gravure définies ci-dessus sont des conditions optimisées pour obtenir la sélectivité (rapport des vitesses de gravure entre le masque de billes de silice et le matériau à graver de type SiC ou SiSiC) permettant d'aboutir à un rapport de forme des microstructures, défini comme le rapport de leur hauteur sur leur largeur, d'environ 1, c'est-à-dire compris entre 0,3 et 5.

Il est à remarquer que lorsque le procédé de fabrication utilise un substrat en carbure de silicium SiC monocristallin, il faut adjoindre audit substrat un matériau opaque sur la face opposée à la face d'exposition structurée pour réaliser un bon émetteur infrarouge IR, cela en raison de la transparence dans l'infrarouge du carbure de silicium SiC monocristallin.

Les structurations obtenues par les procédés de fabrication décrits ci-dessus peuvent être appliquées sur des matériaux massifs épais et également sur des couches de type de carbure de silicium créées sur des substrats de matériau différent.

D'autres chimies de gravure peuvent être utilisées, en particulier les chimies fluorées.

Suivant la figure 6, un mécanisme de gravure sèche dit de « bombardement ionique » est mis en oeuvre dans les procédés de fabrication des Figures 4 et 5.

Selon ce mécanisme représenté par les flèches 322, 324, 326, les ions issus du plasma de SF₆ attaquent frontalement de manière peu sélective et anisotrope la surface du substrat qui est accessible au travers des interstices de passage existant entre les billes de masquage. L'efficacité de l'attaque est d'autant plus élevée que l'accès à la surface du matériau au travers du tapis de billes est facile. Sur la Figure 6, les longueurs de flèches d'attaque 322, 324, 326, proportionnelles à l'intensité et l'efficacité de l'attaque par bombardement ionique décroissent en partant d'un point 330 de surface du substrat à « ciel ouvert » pour aller vers un point de contact 332 de la bille de masquage 328. De manière connexe, la gravure par bombardement ionique de la surface du substrat est accompagnée d'une gravure du masquage par érosion ionique de la surface des billes de masquage, l'érosion de la surface des billes de masquage ayant un effet sur la vitesse de gravure. Ce mécanisme dit de « bombardement ionique » est à l'origine de la forme des microstructures décrites dans les Figures 1 à 3.

Ainsi, le procédé des Figures 4 et 5 permet d'obtenir les structurations comme celles décrites sur les Figures 1 à 3.

Les avantages du procédé de fabrication selon le premier et le deuxième mode de réalisation des Figures 4 et 5 sont les suivants :
.- une réalisation de la fabrication des surfaces selon l'invention à basse température, c'est-à-dire à une température inférieure à 100°C, sans traitement thermique à haute température, ce qui peut faciliter l'intégration de ce matériau dans un dispositif, tel que par exemple un capteur de gaz, intégrant une source ou émetteur IR avec un élément résistif chauffant, une cavité comportant un gaz à tester et un capteur ou détecteur de rayonnement IR,
.- une adaptation de l'émission IR en fonction de la géométrie de la structuration de la surface, en raison du fait que le spectre d'émission dépend de la forme et de la taille des microstructures,
.- une résistance élevée à l'oxydation thermique et donc une stabilité dans le temps des performances de la surface émettrice qui doit être chauffée pour émettre son flux de rayonnement infrarouge IR.

Suivant, la Figure 7 et à titre d'exemple, différents spectres simulés de réflectivité sont tracés pour différentes structurations des surfaces sélectives d'émission. Ici dans cette simulation, les microstructures sont supposées être des demi-sphères accolées en un réseau bidimensionnel à maille hexagonale compacte. Ici, un premier spectre 352, un deuxième spectre 354, un troisième spectre 356 correspondent respectivement à des tailles des microstructures, ici les diamètres des demi-sphères, égales à 0,5, 1 et 5 microns.

Il apparait que l'augmentation de la taille des microstructures a pour effet dans la gamme de 1 à 5 microns de réduire la réflectivité et donc d'augmenter l'émission pour un matériau opaque.

Ainsi, les performances optiques en termes d'augmentation de l'absorption et de l'émission à des longueurs d'onde prédéterminées de l'infrarouge IR sont optimisées en adaptant la taille des microstructures en carbure de silicium (SiC ou SiSiC).

Par exemple, en augmentant le diamètre des microstructures à 1 micron, l'absorption et l'émission de la surface sélective d'émission sont maximisés dans le domaine des longueurs d'ondes de 4 à 4.5 microns pour détecter le dioxyde de carbone CO₂.

Suivant la Figure 8, des spectres mesurés de réflectivité 362, 364, 366, 368, 370 dans les domaine visible et infrarouge pour différentes structurations d'une surface sélective selon l'invention en carbure de silicium SiC sont comparés avec un premier spectre mesuré 372 d'une surface de carbure de silicium SiC brute non structurée ou lisse, les spectres étant mesurés avant un quelconque vieillissement, en particulier dans un environnement oxydant à haute température.

Le spectre 362 correspond à des microstructures de type « maskless etching » (i.e. réalisées sans masque de billes) de petites tailles, inférieures à 200nm qui affectent surtout le domaine du visible, pour les longueurs d'onde comprises entre 300 et 800nm. Les spectres 364, 366 correspondent aux microstructures dénommées « SiC 0.5 » qui ont une taille caractéristique de 0.5 micron dans le plan de la surface. Elles améliorent l'absorption et donc l'émission dans la zone du visible et du proche infrarouge IR entre 300 et 2500nm. Si l'on augmente la taille caractéristique des microstructures jusqu'à 1 micron, les échantillons sont alors dénommées « SiC 1 » et les spectres correspondants montrent que le domaine de réduction de réflectivité et d'amélioration d'émission est étendu dans le moyen infrarouge IR, celui adapté pour les capteurs de gaz, et présente une très bonne performance dans la gamme 4-4.5 microns, encadré sur la Figure 8 par un rectangle 374, utile pour la détection du dioxyde de carbone CO₂.

Une réduction de réflectivité de 20% à moins de 5% est ici observée dans la gamme 4-4.5 microns. Cette réduction de réflectivité est associée à une augmentation de l'émission IR car ce matériau, ici du carbure de silicium SiC poly-cristallin obtenu par pressage à chaud, est opaque pour une épaisseur suffisante.

Les Figure 9 à 12 et 14 illustrent la résistance à l'oxydation des surfaces sélectives d'émission de rayonnement infrarouge.

Suivant la Figure 9, des spectres de réflectivité 381, 382, 383, 384, 385, 386, 387, 388 mesurés dans les domaines du visible et de l'infrarouge d'un émetteur de rayonnement infrarouge IR en carbure de silicium enrichi SiSiC dont la surface est structurée suivant la deuxième forme de réalisation de la Figure 3, sont illustrés. Les spectres 381, 382, 383, 384 dans le domaine du visible, respectivement les spectres 385, 386, 387, 388 sont mesurés à différents instants respectifs, 0 heure, 3 heures, 15 heures, 25 heures, lors d'un vieillissement sous air à une température de 1000°C.

La Figure 9 confirme l'intégrité des émetteurs de rayonnement IR à surface d'émission structurée selon invention pour des températures de vieillissement extrêmement élevés de l'ordre de 1000° C, sous air, avec des spectres dans le domaine visible 381, 382, 383, 384 et dans le domaine infrarouge 385, 386, 387, 388 inchangés entre 0 et 25 heures.

Suivant la Figure 10, l'évolution temporelle 392 de l'absorption solaire mesuré d'un émetteur de rayonnement infrarouge en carbure de silicium enrichi SiSiC dont la surface d'émission exposée est structurée suivant la deuxième forme de réalisation de la Figure 3 est illustrée, le vieillissement ayant lieu à une température de 1000° sous air. Il est à remarquer que l'absorption est équivalente à l'émissivité pour un corps opaque. Il apparait que l'absorption solaire et à travers elle le paramètre réflectivité reste quasiment inchangée au cours du temps pour des températures extrêmes et confirme les excellentes performances en durée de vie des émetteurs structurés selon l'invention.

Ces excellentes propriétés de durée de vies sont obtenues grâce à la résistance intrinsèque du carbure de silicium à l'oxydation mais aussi aux formes géométriques particulières de structures réalisées selon l'invention.

En effet comme le montre la Figure 11, la forme accidentée ou irrégulière et la petite taille de microstructures 402, telles que des microstructures parasites de type « maskless etching » (diamètre d'environ 100∼200nm) ou des microstructures représentatives de l'état de la technique (taille inférieure ou égale à deux cents nanomètres), sont modifiées nettement lors d'un vieillissement après 250 heures sous air à une température permanente de 1000°C en étant totalement oxydée par une couche d'oxyde de dimension relativement importante.

A l'inverse et comme le montre la Figure 12, la forme régulière (sphérique, conique adoucie, parabolique) et la relativement grande taille des microstructures 412 d'une surface selon l'invention des Figures 1 et 3, permettent aux microstructures 412 de conserver sensiblement la même forme et la même taille en étant légèrement oxydées en surface. Ainsi la propriété optique de faible réflectivité / forte d'absorption est conservée en conditions extrêmes de température et de milieu oxydant.

La conservation des performances optiques à 1000°C assure une grande durée de vie des surfaces d'émission IR utilisées dans les émetteurs thermiques.

La propriété optique de faible réflectivité / forte d'absorption / forte émission IR est donc conservée en conditions extrêmes.

En variante des premier et deuxième modes de réalisation du procédé de fabrication et suivant les Figures 13A et 13B, des troisième et quatrième modes de réalisation 422, 432 d'un procédé de fabrication d'une surface d'émission de rayonnement selon l'invention comprennent respectivement les mêmes étapes que celles des procédés 202, 302 des Figures 4 et 5. Les troisième et quatrième procédés de fabrication 422, 432 comprennent chacun une étape supplémentaire 452 d'oxydation thermique à haute température de la surface structurée selon l'invention à base de carbure de silicium. L'étape supplémentaire 452 est exécutée en fin des procédés 422, 432 après les procédés de base respectifs 202, 302.

Le minimum de réflexion dans la bande 4-6 microns obtenu permet aussi de maximiser l'émission thermique d'une source IR fabriquée avec du carbure de silicium. Les surfaces d'émission IR obtenues par les troisième et quatrième procédés 422, 432 présentent également une durée de vie longue en présentant des propriétés optiques stables lors d'un vieillissement. Néanmoins, la réalisation de ces troisième et quatrième modes de réalisation du procédé de fabrication est plus complexe et comporte une étape à haute température pouvant poser des problèmes d'intégration dans le dispositif final.

Suivant la Figure 14, des spectres mesurés 452, 454, 456, 458, 460, 462 de réflectivité dans les domaines visibles et infrarouge pour différentes structurations d'une surface sélective d'émission IR selon l'invention sont comparés avec le spectre mesuré d'une surface de carbure de silicium SiCi non structurée ou lisse, toutes les mesures ayant lieu après un traitement thermique sous air à une température de 1200°C pendant 100 heures.

Les spectres mesurés 454, 456, 458, 460 confirment que les structures selon l'invention, réalisées selon les premier et deuxième modes de réalisation des procédés de fabrication des Figures 3 et 4, sont extrêmement stables et conservent un minimum de réflectivité (absorption / émission maximales) même partiellement oxydées.

Les spectres mesurés 454, 456, 458, 460 avant vieillissement des surfaces sélectives structurées, réalisées selon les troisième et quatrième procédés 422, 432, montrent une faible réflectivité des surfaces et donc une émission élevée pour un corps opaque
Tous les spectres mesurés 452, 456, 458, 460, 462 présentent des performances optiques de faible réflectivité / forte d'absorption / forte émission IR similaires.

Suivant la Figure 14 et le spectre 462, il apparait que la création d'une couche d'oxyde de surface sur un échantillon ayant une surface brute, non structurée ou lisse, provoque une réduction de la réflectivité, et une maximisation de l'émission pour un corps opaque, aux longueurs d'ondes proches de 4 microns, propres à réaliser une source infrarouge IR pour la détection du dioxyde de carbone CO₂. Ainsi, un procédé de fabrication d'une surface sélective d'émission de rayonnement infrarouge IR, réalisé en une seule étape par oxydation thermique d'une surface lisse à base de carbure de silicium à 1200°C pendant 100h ou à plus haute température, c'est-à-dire une température comprise entre 1400 et 1600°C, sur une durée réduite, constitue une alternative aux quatre modes de réalisation du procédé de fabrication selon l'invention des Figures 4, 5, 6A et 6B. Cette alternative est intéressante en termes de simplicité de mise en oeuvre du procédé.

Néanmoins, l'inconvénient de ce procédé alternatif est un temps d'exécution long du procédé et/ou une température très élevée qui peut être incompatible avec certaines intégrations combinant des matériaux ne résistant pas à cette température. Suivant cette alternative, l'oxyde a une stoechiométrie comprise entre celle de SiO et SiO₂ avec une épaisseur typique de l'ordre de 100 à 1000nm.

Les applications possibles des surfaces d'émission de rayonnement infrarouge selon l'invention décrites ci-dessus concernent principalement le secteur des capteurs de gaz. Pour de tels capteurs, une bonne capacité à émettre le rayonnement infrarouge IR est recherchée avec en même temps une bonne résistance à la température et/ou en particulier à l'air pour éviter de mettre toute la structure du capteur sous vide, ce qui est couteux. Les moyens de structuration de la surface à base de carbure de silicium, décrits ci-dessus, permettent de maximiser l'absorption et l'émission infrarouge IR de la surface et, en même temps, d'apporter une excellente résistance à une température élevée et un milieu corrosif comme l'air en termes de tenue de ses propriétés optiques.

Ces surfaces d'émission permettent d'améliorer la performance des sources infrarouge IR en augmentant le flux infrarouge IR émis à une température donnée, et en conséquence le rendement calculé comme étant le rapport entre la puissance infrarouge IR émise et la puissance consacrée au chauffage de la source, généralement réalisée par effet Joule.

De plus, ces surfaces d'émission permettent un fonctionnement sous air et donc simplifient l'intégration de la source et diminue le coût du capteur. Enfin, ces surfaces hautement résistantes à l'oxydation permettent d'augmenter la fiabilité et la durée de vie de la source et du capteur.

Un émetteur de rayonnement IR utilisant de telles surfaces d'émission peut servir de source de chauffage IR, d'émetteur de rayonnement infrarouge IR vers une cellule thermo-photovoltaïque, ou de source infrarouge IR pour des capteurs. Dans tous les cas son avantage est sa résistance à l'oxydation à hautes températures et donc la possibilité de l'utiliser sous air ou sous un vide peu poussé.

Les propriétés optiques de ces surfaces d'émission leur permettent d'émettre un rayonnement infrarouge (IR) de spectre différent de celui du matériau d'origine grâce à la fonctionnalisation / structuration de la surface.

L'augmentation de l'intensité radiative émise pour une température donnée se fait dans une gamme de longueur d'onde dépendante de la structure réalisée.

Dans tous les cas, outre la forte émission IR lorsqu'il est chauffé, l'avantage de ces surfaces à base de carbure de silicium structuré dans des dimensions particulières, est sa haute résistance à l'oxydation à haute température et donc la stabilité de ses performances dans le temps.

## Revendications

1. Surface d'émission de rayonnement infrarouge IR, à émissivité thermique élevée, pour émetteur de rayonnement infrarouge, comprenant
un substrat (4; 104), constitué d'une épaisseur d'un premier matériau à base de carbure de silicium SiC, et ayant une face (6 ; 106) plane ou courbe, et
un ensemble (8) de microstructures (12, 14, 16, 18, 20, 22, 24 ; 108) de texturation tapissant la face (6 ; 106),
ladite surface d'émission de rayonnement infrarouge IR étant **caractérisée en ce que**
chaque microstructure (12, 14, 16, 18, 20, 22, 24) est formée par une unique protubérance réalisée dans le premier matériau, disposée sur et d'un seul tenant avec le substrat (4 ; 104), et
les microstructures (12, 14, 16, 18, 20, 22, 24) ont une même forme et mêmes dimensions, et sont réparties sur la face (6 ; 106) du substrat (4 ; 104) selon un motif périodique bidimensionnel, et
la forme de chaque microstructure (12, 14, 16, 18, 20, 22, 24 ; 108) est lisse et régulière en ayant un sommet unique et un rayon de courbure qui varie continument depuis le sommet de la microstructure (12, 14, 16, 18, 20, 22, 24) jusqu'à la face (6 ; 106) du substrat (4 ; 104).

2. Surface d'émission de rayonnement infrarouge IR selon la revendication 1, dans laquelle le premier matériau à base de carbure de silicium est
du carbure de silicium SiC monocristallin ou poly-cristallin, ou
du carbure de silicium SiC monocristallin ou poly-cristallin, enrichi en silicium Si sous forme d'îlots de silicium Si.

3. Surface d'émission de rayonnement infrarouge IR selon l'une quelconque des revendications 1 à 2, dans laquelle
la surface de chaque microstructure (12, 14, 16, 18, 20, 22, 24 ; 108) présente un sommet, situé dans une zone centrale à une même hauteur maximale h, correspondant à la hauteur de la microstructure (12, 14, 16, 18, 20, 22, 24 ; 108), et ladite surface de la microstructure décroit depuis le sommet vers un bord (22) d'une base de la microstructure (12, 14, 16, 18, 20, 22, 24 ; 108).

4. Surface d'émission de rayonnement infrarouge IR selon l'une quelconque des revendications 1 à 3, dans laquelle
la surface de chaque microstructure (12, 14, 16, 18, 20, 22, 24 : 108) comporte une partie de la surface d'une calotte sphérique ou elliptique ou parabolique.

5. Surface d'émission de rayonnement infrarouge IR selon l'une quelconque des revendications 1 à 4, dans laquelle
chaque microstructure a sensiblement un même diamètre de base d supérieur ou égal à 0,5 µm et inférieur ou égal à 7 µm, de préférence compris entre 1 µm et 5 µm, et
la même hauteur maximale h de chaque microstructure est supérieure ou égale à 0,5 fois le diamètre de base d et inférieure ou égale à 10 fois le diamètre de base d.

6. Surface d'émission de rayonnement infrarouge IR selon l'une quelconque des revendications 1 à 5, dans laquelle
le rayon de courbure p de chaque microstructure (12, 14, 16, 18, 20, 22, 24 ; 108) est supérieur ou égal à 0,1 µm et distribué autour d'une valeur centrale de rayon de courbure comprise entre 0,5 µm et 5 µm.

7. Surface d'émission de rayonnement infrarouge IR selon l'une quelconque des revendications 1 à 6, dans laquelle
l'agencement des microstructures sur la face d'exposition du substrat est réalisé sous la forme d'un pavage de réseaux élémentaires de microstructures,
les réseaux élémentaires ayant un même motif de maille compris dans l'ensemble formé par les mailles hexagonales, les mailles carrés, les mailles triangulaires, et étant **caractérisé par** un degré de compacité des microstructures entre elles.

8. Surface d'émission de rayonnement infrarouge IR selon l'une quelconque des revendications 1 à 7, dans laquelle
la surface de chaque microstructure et la face du substrat sont oxydées.

9. Emetteur de rayonnement infrarouge IR comportant une surface d'émission de rayonnement infrarouge IR définie selon l'une quelconque des revendications 1 à 8.

10. Sources de chauffage infrarouge comportant un émetteur de rayonnement infrarouge IR selon la revendication 9.

11. Convertisseur de chaleur en électricité comportant une cellule thermo-photovoltaïque et un émetteur de rayonnement infrarouge IR selon la revendication 9, l'émetteur infrarouge IR émettant vers la cellule thermo-photovoltaïque.

12. Capteurs de gaz comportant un émetteur de rayonnement infrarouge IR selon la revendication 9.

13. Procédé de fabrication d'une surface d'émission de rayonnement infrarouge IR, apte à fonctionner à des températures élevées,
ledit procédé de fabrication comprenant
une première étape (204) consistant à fournir un substrat, constitué d'une épaisseur d'un premier matériau à base de carbure de silicium SiC, et ayant une face d'exposition plane ou courbe,
**caractérisé en ce qu'**il comprend en outre
une deuxième étape (206 ; 306), exécutée à la suite de la première étape, consistant à réaliser un ensemble de microstructures de texturation, tapissant la face,
chaque microstructure étant formée par une unique protubérance réalisée dans le premier matériau, et disposée sur et d'un seul tenant avec le substrat, et
les microstructures ayant une même forme et mêmes dimensions, étant réparties sur la face du substrat selon un motif périodique bidimensionnel, et
la forme de chaque microstructure étant lisse et régulière en ayant un sommet unique et un rayon de courbure qui varie continument depuis le sommet jusqu'à la face.

14. Procédé de fabrication d'une surface d'émission de rayonnement infrarouge IR selon la revendication 13, dans lequel
la première étape (204) consiste :
soit à fournir du carbure de silicium SiC monocristallin ou poly-cristallin, ou
soit à fournir du carbure de silicium SiC monocristallin ou poly-cristallin, enrichi en silicium sous forme d'îlots de silicium Si.

15. Procédé de fabrication d'une surface d'émission de rayonnement infrarouge IR selon l'une quelconque des revendications 13 à 14, dans lequel
la première étape (204) consiste :
soit à comprimer de manière isostatique une poudre de carbure de silicium SIC, ou
soit à faire croitre du carbure de silicium SiC poly-cristallin, ou
soit à faire croitre du carbure de silicium SiC monocristallin, ou
soit à infiltrer du silicium à Si haute température dans une matrice carbonée poreuse.

16. Procédé de fabrication d'une surface d'émission de rayonnement infrarouge IR selon l'une quelconque des revendications 13 à 15, dans lequel
la deuxième étape (206 ; 306) comprend les étapes successives consistant à
dans une troisième étape (208) déposer une monocouche compacte de particules en un deuxième matériau à la surface du substrat, et
dans une quatrième étape (210) graver par un procédé de gravure sèche le substrat du côté de la face d'exposition au travers d'interstices existant entre les particules,
le deuxième matériau étant compris dans l'ensemble formé par la silice (SiO₂), le polystyrène (PS) ou tout autre matériau colloïdal sous forme de billes de dimension requise.

17. Procédé de fabrication d'une surface d'émission de rayonnement infrarouge IR selon la revendication 16, dans lequel
une réduction de la taille et de la forme des particules par gravure sèche est mise en oeuvre,
soit dans une cinquième étape (212) exécutée pendant la quatrième étape (210) en même temps que la gravure sèche du substrat,
soit dans une sixième étape (312) interposée entre la troisième étape (208) et la quatrième étape (210).

18. Procédé de fabrication d'une surface d'émission de rayonnement infrarouge IR selon l'une quelconque des revendications 16 à 17, dans lequel
le dépôt du film compact de particules mis en oeuvre au cours de la troisième étape (208) est réalisé
soit par une technique de dépôt faisant intervenir l'interface air/liquide pour ordonner les particules comprise dans l'ensemble formé par la technique de Langmuir Blodgett, la technique de Langmuir Shaefer, la méthode vortique de surface, la technique du transfert par flottaison, la technique de l'écoulement laminaire fin dynamique et mobile,
soit par une technique de depôt faisant intervenir exclusivement des particules en solution colloïdale comprise dans l'ensemble formé par le dépôt électrophorétique, le dépôt horizontal par évaporation d'un film, le dépôt par évaporation d'un bain, le dépôt par retrait vertical d'un substrat immergé et le dépôt horizontal par retrait forcé de la ligne de contact.

19. Procédé de fabrication d'une surface d'émission de rayonnement infrarouge IR selon l'une quelconque des revendications 16 à 18, dans lequel
le procédé de gravure sèche mis en oeuvre dans la quatrième étape (210) est une gravure réactive ionique utilisant un mélange gazeux d'hexafluorure de soufre (SF₆) et de dioxygène (O₂) dans un rapport de 5/3.

20. Procédé de fabrication d'une surface d'émission de rayonnement infrarouge IR selon la revendication 19, dans lequel la vitesse de gravure du matériau substrat Vsub et la vitesse de gravure Vpar des particules, la sélectivité de gravure Sg, définie comme le rapport de la vitesse de gravure du substrat sur la vitesse de gravure des particules, et le temps de gravure sont réglés de façon à consommer la totalité des particules et éviter la création d'arêtes vives sur la surface du substrat.

21. Procédé de fabrication d'une surface d'émission de rayonnement infrarouge IR selon l'une quelconque des revendications 16 à 20, comprenant une septième étape (314) de retrait des particules exécutée après la quatrième étape (210).

22. Procédé de fabrication d'une surface d'émission de rayonnement infrarouge IR selon l'une quelconque des revendications 16 à 21, comprenant une huitième étape d'oxydation de la surface des microstructures et de la face du substrat.

## Patentansprüche

1. Abstrahlungsfläche von Infrarotstrahlung IR mit hoher thermischer Abstrahlung für Infrarotstrahler, beinhaltend ein Substrat (4; 104), welches aus einer Dicke eines ersten Materials auf Grundlage von Siliziumkarbid SiC gebildet ist und eine ebene oder gekrümmte Seite (6; 106) besitzt, und
eine Gruppe (8) von Mikrostrukturen (12, 14, 16, 18, 20, 22, 24; 108) zur Texturierung, welche die Seite (6; 106) bekleidet,
wobei die Abstrahlungsfläche von Infrarotstrahlung IR **dadurch gekennzeichnet ist, dass**
jede Mikrostruktur (12, 14, 16, 18, 20, 22, 24) durch einen einzigen Vorsprung gebildet ist, welcher aus dem ersten Material gefertigt ist, welcher auf dem Substrat (4; 104) angeordnet und einstückig damit verbunden ist, und
die Mikrostrukturen (12, 14, 16, 18, 20, 22, 24) eine gleiche Form und gleiche Abmessungen besitzen und auf der Seite (6; 106) des Substrates (4; 104) entsprechend einem bidimensionalen, periodischen Muster verteilt sind, und
die Form einer jeden Mikrostruktur (12, 14, 16, 18, 20, 22, 24; 108) glatt und regelmäßig ist und eine einzige Spitze und einen Krümmungsradius besitzt, welcher kontinuierlich von der Spitze der Mikrostruktur (12, 14, 16, 18, 20, 22, 24) bis zur Seite (6; 106) des Substrates (4; 104) variiert.

2. Abstrahlungsfläche von Infrarotstrahlung IR nach Anspruch 1, bei welcher das erste Material auf Grundlage von Siliziumkarbid Folgendes ist:
mono- oder polykristallines Siliziumkarbid SiC, oder
mono- oder polykristallines Siliziumkarbid SiC, angereichert mit Silizium Si in Form von Inseln aus Silizium Si.

3. Abstrahlungsfläche von Infrarotstrahlung IR nach einem der Ansprüche 1 bis 2, bei welcher
die Oberfläche einer jeden Mikrostruktur (12, 14, 16, 18, 20, 22, 24; 108) eine Spitze aufweist, welche in einem mittleren Bereich in einer gleichen maximalen Höhe h befindlich ist, welche der Höhe der Mikrostruktur (12, 14, 16, 18, 20, 22, 24; 108) entspricht, und wobei die Oberfläche der Mikrostruktur von der Spitze zu einem Rand (22) einer Basis der Mikrostruktur (12, 14, 16, 18, 20, 22, 24; 108) abnimmt.

4. Abstrahlungsfläche von Infrarotstrahlung IR nach einem der Ansprüche 1 bis 3, bei welcher
die Oberfläche einer jeden Mikrostruktur (12, 14, 16, 18, 20, 22, 24; 108) einen Teil der Oberfläche einer sphärischen oder elliptischen oder parabelförmigen Kalotte beinhaltet.

5. Abstrahlungsfläche von Infrarotstrahlung IR nach einem der Ansprüche 1 bis 4, bei welcher
jede Mikrostruktur einen im Wesentlichen gleichen Basisdurchmesser d besitzt, welcher größer oder gleich 0,5 µm und kleiner oder gleich 7 µm ist und vorzugsweise zwischen 1 µm und 5 µm liegt, und
die gleiche maximale Höhe h einer jeden Mikrostruktur größer als das oder gleich dem 0,5-Fache(n) des Basisdurchmessers d und kleiner als das oder gleich dem 10-Fache(n) des Basisdurchmessers d ist.

6. Abstrahlungsfläche von Infrarotstrahlung IR nach einem der Ansprüche 1 bis 5, bei welcher
der Krümmungsradius p einer jeden Mikrostruktur (12, 14, 16, 18, 20, 22, 24; 108) größer oder gleich 0,1 µm ist und rund um einen mittleren Krümmungsradiuswert verteilt ist, welcher zwischen 0,5 µm und 5 µm beträgt.

7. Abstrahlungsfläche von Infrarotstrahlung IR nach einem der Ansprüche 1 bis 6, bei welcher
die Anordnung der Mikrostrukturen auf der Expositionsfläche des Substrates in Form eines Pflasterbelags aus Elementametzen von Mikrostrukturen gebildet ist,
wobei die elementaren Netze ein gleiches Maschenmuster besitzen, welches in der Gruppe beinhaltet ist, bestehend aus sechseckigen Maschen, quadratischen Maschen und dreieckigen Maschen und welches durch einen Kompaktheitsgrad der Mikrostrukturen untereinander gekennzeichnet ist.

8. Abstrahlungsfläche von Infrarotstrahlung IR nach einem der Ansprüche 1 bis 7, bei welcher
die Oberfläche einer jeden Mikrostruktur und die Seite des Substrates oxidiert sind.

9. Infrarotstrahler IR, welcher eine Abstrahlungsfläche für Infrarotstrahlung IR nach einem der Ansprüche 1 bis 8 beinhaltet.

10. Infrarot-Heizquellen, welche einen Infrarotstrahler IR nach Anspruch 9 beinhalten.

11. Wärme-Strom-Wandler, beinhaltend eine Thermo-Photovoltaikzelle und einen Infrarotstrahler IR nach Anspruch 9, wobei der Infrarotstrahler IR in Richtung der Thermo-Photovoltaikzelle abstrahlt.

12. Gassensoren, welche einen Infrarotstrahler IR nach Anspruch 9 beinhalten.

13. Herstellungsverfahren einer Abstrahlungsfläche für Infrarotstrahlung IR, welche in der Lage ist, bei hohen Temperaturen zu arbeiten,
wobei das Herstellungsverfahren Folgendes beinhaltet:
einen ersten Schritt (204), bestehend im Bereitstellen eines Substrates, welches aus einer Dicke eines ersten Materials auf Grundlage von Siliziumkarbid SiC gebildet ist und eine ebene oder gekrümmte Expositionsseite besitzt,
**dadurch gekennzeichnet, dass** es zudem folgende Schritte beinhaltet:
einen zweiten Schritt (206; 306), ausgeführt im Anschluss an den ersten Schritt, bestehend in der Herstellung einer Gruppe von Texturierungs-Mikrostrukturen, welche die Seite bekleiden,
wobei jede Mikrostruktur durch einen einzigen Vorsprung gebildet ist, welcher aus dem ersten Material gefertigt ist, und auf dem Substrat (4; 104) angeordnet und einstückig damit verbunden ist, und
die Mikrostrukturen, welche eine gleiche Form und gleiche Abmessungen besitzen, über die Seite des Substrates nach einem periodischen, bidimensionalen Muster verteilt sind, und
die Form einer jeden Mikrostruktur glatt und regelmäßig ist und eine einzige Spitze und einen Krümmungsradius besitzt, welcher kontinuierlich von der Spitze bis zur Seite variiert.

14. Herstellungsverfahren einer Abstrahlungsfläche für Infrarotstrahlung IR nach Anspruch 13, bei welchem
der erste Schritt (204) darin besteht:
entweder, mono- oder polykristallines Siliziumkarbid SiC bereitzustellen, oder
mono- oder polykristallines Siliziumkarbid SiC, angereichert mit Silizium Si in Form von Inseln aus Silizium, bereitzustellen.

15. Herstellungsverfahren einer Abstrahlungsfläche für Infrarotstrahlung IR nach einem der Ansprüche 13 bis 14, bei welchem
der erste Schritt (204) darin besteht:
entweder, ein Siliziumkarbidpulver SiC isostatisch zu komprimieren, oder
Wachstum von polykristallinem Siliziumkarbid SiC herbeizuführen, oder
Wachstum von monokristallinem Siliziumkarbid SiC herbeizuführen, oder
Silizium Si bei hoher Temperatur in eine poröse, kohlenstoffhaltige Matrix zu infiltrieren.

16. Herstellungsverfahren einer Abstrahlungsfläche für Infrarotstrahlung IR nach einem der Ansprüche 13 bis 15, bei welchem
der zweite Schritt (206; 306) die aufeinanderfolgenden Schritte beinhaltet, die darin bestehen
in einem dritten Schritt (208) eine kompakte einschichtige Schicht von Partikeln aus einem anderen Material auf der Oberfläche des Substrats abzulagern, und
in einem vierten Schritt (210) anhand eines Trockengravurverfahrens das Substrat expositionsseitig durch Zwischenräume hindurch, die zwischen den Partikeln vorhanden sind, zu gravieren,
wobei das zweite Material in der Gruppe beinhaltet ist, gebildet aus Silizium (SiO₂), Polystyrol (PS) oder sonstigen kolloidförmigen Materialien aller Art in Form von Kügelchen der erforderlichen Abmessung.

17. Herstellungsverfahren einer Abstrahlungsfläche für Infrarotstrahlung IR nach Anspruch 16, bei welchem
eine Reduzierung der Größe und der Form der Partikel durch Trockengravur umgesetzt wird,
entweder in einem fünften Schritt (212), welcher währen des vierten Schrittes (210) gleichzeitig mit der Trockengravur des Substrates ausgeführt wird, oder in einem sechsten Schritt (312), welcher zwischen dem dritten Schritt (208) und dem vierten Schritt (210) zwischengeschaltet wird.

18. Herstellungsverfahren einer Abstrahlungsfläche für Infrarotstrahlung IR nach einem der Ansprüche 16 bis 17, bei welchem
die Ablagerung des kompakten Films aus Partikeln, welche im Zuge des dritten Schrittes (208) erfolgt, durchgeführt wird
entweder anhand einer Ablagerungstechnik, welche die Luft-/Flüssigkeitsschnittstelle einbezieht, um die Partikel zu ordnen, beinhaltet in der Gruppe, gebildet aus der Langmuir Blodgett-Technik, der Langmuir Shaefer-Technik, des Oberflächen-Vortex-Verfahrens, der Technik der Flotationsübertragung und der Technik des feinen, dynamischen und mobilen Lamniarabflusses,
oder anhand einer Ablagerungstechnik, welche ausschließlich Partikel in kolloidaler Lösung einbezieht, beinhaltet in der Gruppe, gebildet aus elektrophoretischer Ablagerung, horizontaler Ablagerung durch Verdunstung eines Films, Ablagerung durch Verdunstung eines Bades, Ablagerung durch vertikales Entfernen eines getauchten Substrates und horizontaler Ablagerung durch erzwungenes Entfernen der Kontaktlinie.

19. Herstellungsverfahren einer Abstrahlungsfläche für Infrarotstrahlung IR nach einem der Ansprüche 16 bis 18, bei welchem
das Trockengravurverfahren, welches im vierten Schritt (210) umgesetzt wird, eine reaktive ionische Gravur ist, welche eine gasförmige Mischung aus Schwefelhexafluorid (SF₆) und Disauerstoff (O₂) in einem Verhältnis von 5/3 verwendet.

20. Herstellungsverfahren einer Abstrahlungsfläche für Infrarotstrahlung IR nach Anspruch 19, bei welchem
die Gravurgeschwindigkeit Vsub des Substratmaterials und die Gravurgeschwindigkeit Vpar der Partikel, die Gravurselektivität Sg, definiert als das Verhältnis der Gravurgeschwindigkeit des Substrates zu der Gravurgeschwindigkeit der Partikel, und die Gravurzeit so eingestellt sind, dass sämtliche Partikel verbraucht werden und die Schaffung scharfer Kanten an der Oberfläche des Substrates vermieden wird.

21. Herstellungsverfahren einer Abstrahlungsfläche für Infrarotstrahlung IR nach einem der Ansprüche 16 bis 20,
welches einen siebten Schritt (314) der Entfernung der Partikel beinhaltet, welcher nach dem vierten Schritt (210) ausgeführt wird.

22. Herstellungsverfahren einer Abstrahlungsfläche für Infrarotstrahlung IR nach einem der Ansprüche 16 bis 21, welches einen achten Schritt der Oxidierung der Oberfläche der Mikrostrukturen und der Seite des Substrates beinhaltet.

## Claims

1. Infrared IR radiation emission surface with high thermal emissivity for an infrared radiation emitter, comprising
a substrate (4; 104) consisting of a thickness of a first material based on silicon carbide SiC and having a planar or curved face (6; 106), and
a set (8) of texturing microstructures (12, 14, 16, 18, 20, 22, 24; 108) covering the face (6; 106),
the said infrared IR radiation emission surface being **characterized in that**
each microstructure (12, 14, 16, 18, 20, 22, 24) is formed by a single protuberance made of the first material, which is arranged on and integrally with the substrate (4; 104), and
the microstructures (12, 14, 16, 18, 20, 22, 24) have the same shape and the same dimensions, and are distributed over the face (6; 106) of the substrate (4; 104) in a bidimensional periodic pattern, and
the shape of each microstructure (12, 14, 16, 18, 20, 22, 24;108) is smooth and regular, while having a single apex and a radius of curvature which varies continuously from the apex of the microstructure (12, 14, 16, 18, 20, 22, 24) to the face (6; 106) of the substrate (4; 104).

2. Infrared IR radiation emission surface according to claim 1, wherein the first material based on silicon carbide is
monocrystalline or polycrystalline silicon carbide SiC, or
monocrystalline or polycrystalline silicon carbide SiC enriched with silicon Si in the form of silicon islands Si.

3. Infrared IR radiation emission surface according to any one of claims 1 to 2, wherein
the surface of each microstructure (12, 14, 16, 18, 20, 22, 24; 108) has an apex lying in a central region with the same maximum height h, corresponding to the height of the microstructure (12, 14, 16, 18, 20, 22, 24; 108), and the said surface of the microstructure decreases from the apex towards an edge (22) of a base of the microstructure (12, 14, 16, 18, 20, 22, 24; 108).

4. Infrared IR radiation emission surface according to any one of claims 1 to 3, wherein
the surface of each microstructure (12, 14, 16, 18, 20, 22, 24; 108) comprises a part of the surface of a spherical, elliptical or parabolic cap.

5. Infrared IR radiation emission surface according to any one of claims 1 to 4, wherein
each microstructure substantially has the same base diameter d, which is greater than or equal to 0.5 µm and less than or equal to 7 µm, preferably lying between 1 µm and 5 µm, and
the same maximum height h of each microstructure is greater than or equal to 0.5 times the base diameter d and less than or equal to 10 times the base diameter d.

6. Infrared IR radiation emission surface according to any one of claims 1 to 5, wherein
the radius of curvature p of each microstructure (12, 14, 16, 18, 20, 22, 24; 108) is greater than or equal to 0.1 µm and distributed around a central radius of curvature value of between 0.5 µm and 5 µm.

7. Infrared IR radiation emission surface according to any one of Claims 1 to 6, wherein
the arrangement of the microstructures on the exposure face of the substrate is carried out in the form of tiling of elementary networks of microstructures,
the elementary networks having the same cell pattern among the group formed by hexagonal cells, square cells and triangular cells, and being **characterized by** a degree of compactness of the microstructures with respect to one another.

8. Infrared IR radiation emission surface according to any one of claims 1 to 7, wherein
the surface of each microstructure and the face of the substrate are oxidized.

9. Infrared IR radiation emitter comprising an infrared IR radiation emission surface as defined in any one of claims 1 to 8.

10. Infrared heating sources comprising an infrared IR radiation emitter according to claim 9.

11. Heat into electricity converter comprising a thermophotovoltaic cell and an infrared IR radiation emitter according to claim 9, the infrared IR radiation emitter emitting to the thermophotovoltaic cell.

12. Gas sensors comprising an infrared IR radiation emitter according to claim 9.

13. Method for manufacturing an infrared IR radiation emission surface capable of operating at high temperatures,
said manufacturing method comprising
a first step (204) consisting in providing a substrate, consisting of a thickness of a first material based on silicon carbide SiC and having a planar or curved exposure face,
**characterized in that** it furthermore comprises
a second step (206; 306), carried out following the first step, consisting in producing an ensemble of texturing microstructures covering the face,
each microstructure being formed by a single protuberance made of the first material and arranged on and integrally with the substrate, and
the microstructures having the same shape and the same dimensions, being distributed over the face of the substrate in a bidimensional periodic pattern, and
the shape of each microstructure being smooth and regular, while having a single apex and a radius of curvature which varies continuously from the apex to the face.

14. Method for manufacturing an infrared IR radiation emission surface according to Claim 13, wherein
the first step (204) consists:
either in providing monocrystalline or polycrystalline silicon carbide SiC, or
in providing monocrystalline or polycrystalline silicon carbide SiC enriched with silicon in the form of silicon islands Si.

15. Method for manufacturing an infrared IR radiation emission surface according to any one of claims 13 to 14, wherein
the first step (204) consists:
either in isostatically compressing a silicon carbide SIC powder, or
in growing polycrystalline silicon carbide SIC, or
in growing monocrystalline silicon carbide SIC, or
in infiltrating silicon Si at high temperature into a porous carbon-containing matrix.

16. Method for manufacturing an infrared IR radiation emission surface according to any one of claims 13 to 15, wherein
the second step (206; 306) comprises the successive steps consisting in
in a third step (208), depositing a compact monolayer of particles of a second material on the surface of the substrate, and
in a fourth step (210), etching the substrate by a dry etching method on the exposure face side through interstices existing between the particles,
the second material being included in the group formed by silica (SiO₂), polystyrene (PS) or any other colloidal material in the form of balls with the required dimension.

17. Method for manufacturing an infrared IR radiation emission surface according to claim 16, wherein
reduction of the size and the shape of the particles by dry etching is carried out,
either in a fifth step (212) carried out during the fourth step (210) at the same time as the dry etching of the substrate,
or in a sixth step (312) interposed between the third step (208) and the fourth step (210).

18. Method for manufacturing an infrared IR radiation emission surface according to any one of claims 16 to 17, wherein
the deposition of the compact film of particles carried out during the third step (208) is performed
either by a deposition technique involving an air/liquid interface ordering the particles, among the group formed by the Langmuir-Blodgett technique, the Langmuir-Shaefer technique, the surface vortex method, the flotation transfer technique, the technique of fine dynamic and mobile laminar flow,
or by a deposition technique involving only particles in colloidal solution, among the group formed by electrophoretic deposition, horizontal deposition by evaporation of a film, deposition by evaporating of a bath, deposition by vertical removal of an immersed substrate, and horizontal deposition by forced removal of the contact line.

19. Method for manufacturing an infrared IR radiation emission surface according to any one of claims 16 to 18, wherein
the dry etching method carried out in the fourth step (210) is reactive ion etching using a gas mixture of sulfur hexafluoride (SF₆) and dioxygen (O₂) in a ratio of 5/3.

20. Method for manufacturing an infrared IR radiation emission surface according to claim 19, wherein
the etching rate Vsub of the substrate material and the etching rate Vpar of the particles, the etching selectivity Sg, defined as the ratio of the etching rate of the substrate to the etching rate of the particles, and the etching time are regulated so as to consume all of the particles and avoid the creation of sharp edges on the surface of the substrate.

21. Method for manufacturing an infrared IR radiation emission surface according to any one of claims 16 to 20, comprising a seventh step (314) for removing the particles, which is carried out after the fourth step (210).

22. Method for manufacturing an infrared IR radiation emission surface according to any one of claims 16 to 21, comprising an eighth step of oxidizing the surface of the microstructures and the face of the substrate.
